Europäisches Patentamt

European Patent Office

Office européen des brevets

(19)

(11) Numéro de publication: **0 037 783**
**B1**

(12) **FASCICULE DE BREVET EUROPEEN**

(45) Date de publication du fascicule du brevet:
**12.10.83**

(51) Int. Cl.³: **B 01 J 8/38,** B 65 G 53/46

(21) Numéro de dépôt: **81400537.7**

(22) Date de dépôt: **03.04.81**

(54) **Appareil pour fluidiser des matières pulvérulentes ou granuleuses par incorporation, dans ces matières, d'un gaz sous pression.**

(30) Priorité: **03.04.80 FR 8007556**

(43) Date de publication de la demande:
**14.10.81 Bulletin 81/41**

(45) Mention de la délivrance du brevet:
**12.10.83 Bulletin 83/41**

(84) Etats contractants désignés:
**BE CH DE GB LI NL**

(56) Documents cités:
**BE-A-478 779**
**CH-A-339 122**
**FR-A-1 246 338**
**US-A-2 750 233**
**US-A-2 779 634**
**US-A-3 009 744**

(73) Titulaire: **Sociéte Nouvelle Socama, P.Z.A. de Beauval,** '
**F-77100 Meaux (FR)**

(72) Inventeur: **Casset, Roger Jean André, 17 rue Sébastien de Brossard, F-77100 Meaux (FR)**

(74) Mandataire: **Lepeudry-Gautherat, Thérèse et al, Cabinet Armengaud Jeune Casanova, Akerman, Lepeudry 23 boulevard de Strasbourg, F-75010 Paris (FR)**

# Appareil pour fluidiser des matières pulvérulentes ou granuleuses par incorporation, dans ces matières, d'un gaz sous pression.

Dans les installations de manutention destinées au transport à distance, par effet pneumatique, de matières pulvérulentes ou granuleuses, on a déjà proposé, pour faciliter ce transport, d'incorporer dans la matière du gaz à basse pression, par exemple de l'air sous faible pression, en vue d'obtenir un mélange susceptible de se comporter comme un fluide liquide, cette opération étant connue sous le nom de «fluidisation».

La présente invention a précisément pour objet un appareil pour fluidiser des matières pulvérulentes ou granuleuses, par incorporation, dans ces matières, d'un gaz sous pression.

Par les brevets des Etats-Unis d'Amérique n° 2 750 233 et n° 2 779 634 ainsi que par le brevet français n° 1 246 338, on connaît déjà des appareils construits à cet effet, et comprenant un tambour, comportant, régulièrement répartie sur sa périphérie, une série d'alvéoles délimitées par des ailettes, et susceptible d'être entraîné en rotation, autour d'un axe longitudinal, dans un bâti constitué d'un corps, présentant, à sa partie supérieure, une ouverture de remplissage pour la matière à fluidiser, et fermé par deux flasques latérales présentant, chacune, une ouverture, dont l'une constitue l'ouverture d'alimentation en gaz sous pression, et dont l'autre constitue l'ouverture d'évacuation de la matière fluidisée, la matière qui remplit les alvéoles défilant successivement en regard de l'ouverture de remplissage, étant amenée dans une chambre axiale, définie entre les ouvertures des flasques, par le passage successif des alvéoles en regard de ces ouvertures, l'axe longitudinal de rotation du tambour étant en général disposé horizontalement, et le gaz sous pression destiné à fluidiser la matière étant fourni par une source de gaz annexe sous pression, par exemple un surpresseur d'air, raccordée à la chambre définie entre les ouvertures des flasques, la pression du gaz étant supérieure à celle à laquelle est soumise la matière, lors de son introduction dans l'ouverture de remplissage.

Lors de l'utilisation de ces appareils connus, dont le corps, symétrique par rapport au plan vertical passant par l'axe longitudinal de rotation du tambour, est constitué d'une cuve parallélépipédique de section rectangulaire ou prismatique de section trapézoïdale, débouchant, le cas échéant, par sa petite base, dans une ouverture de la surface latérale d'une partie cylindrique, dans laquelle le tambour est entraîné en rotation, et dont la chambre définie entre les ouvertures des flasques peut être réalisée par une excroissance semi-cylindrique que le corps présente sous sa partie cylindrique, on a constaté qu'il se produit, au-delà d'un certain régime de rotation du tambour, un mouvement de reflux ou de refoulement de la matière hors de l'appareil, par l'ouverture de remplissage, l'amplitude de ce mouvement de refoulement croissant d'ailleurs avec la vitesse de rotation du tambour au-delà du régime critique, ce qui a pour effet de limiter le débit de la matière pouvant être transportée par ces appareils.

On a constaté, par exemple pour un appareil selon le brevet français n° 1 246 338, équipé d'un tambour de 325 mm de diamètre, utilisé pour fluidiser une matière ayant une densité de 0,6, qui le débit était limité à 18 tonnes à l'heure, le refoulement intervenant pour une rotation de 35 tours par minute, ce qui, compte tenu du volume des alvéoles du tambour d'un tel appareil, correspond à un taux de remplissage de l'ordre de 70 à 75%.

De plus, du fait de la présence d'une cuve d'alimentation au-dessus de la partie cylindrique du corps et, éventuellement, d'une excroissance semi-cylindrique au-dessous de cette partie cylindrique, ces appareils sont d'un encombrement vertical important, ce qui constitue une limitation de leur possibilité d'emploi, puisque ces appareils sont destinés à être disposés sous des trémies ou autres installations analogues.

Ces appareils présentent enfin l'inconvénient de ne pas permettre de fluidiser dans de bonnes conditions des matières granuleuses, dont les granules sont très durs, tels que la pulpe sèche de betterave, car le cisaillement de ces granules entre le bord postérieur, dans le sens de rotation du tambour, de l'ouverture de la partie cylindrique du corps, et l'extrémité libre des ailettes ne se produit pas sans à-coups dans la rotation du tambour, ce qui est préjudiciable aux roulements du corps sur lequel le tambour est monté rotatif, ainsi qu'aux organes d'entraînement du tambour, que les ailettes du tambour soient radiales, comme cela est le cas dans le brevet français 1 246 338, qu'elles soient inclinées vers l'avant, dans le sens de rotation du tambour ou qu'elles présentent une portion interne radiale, par laquelle elles se rattachent au moyeu et une portion externe s'inclinant progressivement vers l'avant, comme cela est respectivement le cas dans les brevets des Etats-Unis d'Amérique n° 2 750 233 et 2 779 634. En plus de ces dispositifs, présentant une structure symétrique par rapport au plan vertical diamétral, et qui sont munis d'une ouverture de remplissage, autorisant une alimentation essentiellement radiale, par gravité ou sous pression, ainsi que d'une ouverture axiale d'alimentation en gaz sous pression et d'une ouverture axiale d'évacuation de la matière fluidisée, centrées toutes trois dans le plan vertical diamétral, on connaît, par le brevet suisse n° 339 122, des dispositifs analogues, de structure voisine, permettant une alimentation identique, mais dont l'évacuation est soit tangentielle au tambour dans un plan horizontal à sa partie inférieure, lorsque les ouvertures des flasques latérales sont décalées du côté du plan vertical diamétral opposé à celui où les ailettes descendent vers la partie inférieure du corps, soit radiale vers l'extérieur ou dirigée selon une direction radiale et axiale combinée, dans une position diamétralement opposée à l'ouverture de remplissage lorsque les ouvertures des flasques latérales sont centrées dans le plan vertical diamétral, ces ouvertures des flasques étant dans toutes les variantes de réalisation décrites dans le dernier brevet cité, des ouvertures axiales d'alimentation en gaz sous pression, opposées l'une à l'autre, tandis qu'une ouverture supplémentaire doit être prévue pour l'évacuation. Ces dispositifs présentent, en plus des inconvénients précités, celui de devoir comporter un dispositif d'étanchéité, de manière à empêcher l'échappement, du gaz par toute ouverture autre que celle prévue pour l'évacuation de la matière fluidisée.

Par le brevet belge n° 478 779 on connaît, de plus, un appareil analogue, muni d'une ouverture d'évacuation radiale centrée, à la partie inférieure du corps, sur le plan vertical diamétral, et dont la partie cylindrique du corps présente une ouverture se développant parallèlement aux génératrices sur un secteur circulaire notablement inférieur à 90 ° et correspondant sensiblement à la ouverture de deux alvéoles adjacentes, cette ouverture étant décalée du côté où les palettes du tambour se déplacent vers la partie supérieure du corps et délimitée par son bord longitudinal, postérieur, dans le sens de rotation du tambour, situé sensiblement dans le plan vertical diamétral. La moitié antérieure de cette ouverture est située sous un canal d'alimentation et consitue donc une ouverture de remplissage décalée, dont la largeur correspond sensiblement à celle d'une alvéole, tandis que la moitié postérieure de cette ouverture est balayée par une brosse, montée en rotation entre le bord postérieur du canal d'alimentation et le plan vertical diamétral afin d'obtenir que les alvéoles ne soient pas remplies, ce qui permet d'éviter tout coïncement de matière transportée avec une garniture en caoutchouc prévue autour du tambour.

Compte tenu de la présence du canal d'alimentation à la partie supérieure du corps et d'une chambre radiale d'évacuation à la partie inférieure de ce dernier, l'encombrement vertical d'un tel appareil est important, et son débit est très limité par les caractéristiques de son ouverture de remplissage, et la présence de la brosse rotative.

Un appareil analogue à ouverture de remplissage décalée par rapport au plan vertical diamétral est également décrit dans le brevet des Etats-Unis d'Amérique n° 3 009 744. Dans cette réalisation, le corps de l'appareil comprend une partie cylindrique dans laquelle le tambour est monté rotatif, et qui présente une ouverture, se développant parallèlement aux génératrices sur un secteur circulaire supérieur à 90°, et dont le bord postérieur, par rapport au sens de rotation du tambour, est situé du côté du plan vertical diamétral où les palettes se déplacent vers la partie supérieure du corps et se raccorde au bord postérieur d'une ouverture prévue à la partie supérieure du corps par une paroi verticale, tandis que le bord antérieur de l'ouverture de la partie cylindrique est situé du côté du plan vertical diamétral où les palettes se déplacent vers la partie inférieure du corps, un pan incliné se rattachant tangentiellement à la partie cylindrique au niveau du bord antérieur de l'ouverture de cette dernière pour raccorder ce bord antérieur á celui de l'ouverture prévue à la partie supérieure du corps. Grâce à un barrage longitudinal disposé au voisinage du plan vertical diamétral dans l'ouverture prévue à la partie supérieure du corps, cette ouverture est divisée en une ouverture de dégazage délimitée entre le barrage longitudinal et le bord postérieur de l'ouverture supérieure et permettant la décompression du gaz renfermé dans les alvéoles venant à passer en regard de l'ouverture axiale d'alimentation en gaz sous pression, qui est elle-même décalée du même côté du plan vertical diamétral que l'ouverture de dégazage, c'est-à-dire du côté où les palettes se déplacent vers la partie supérieure du corps, et en une ouverture de remplissage, délimitée entre le barrage longitudinal et le bord antérieur de l'ouverture supérieure, et décalée du côté du plan vertical diamétral où les palettes se déplacent vers la partie inférieure du corps.

Cette réalisation, plus avantageuse sur le plan de l'encombrement vertical que celles présentées précédemment a pour inconvénient principal que son débit est limité, en raison du décalage de l'ouverture de remplissage du côté du plan vertical diamétral où les palettes se déplacent vers la partie inférieure du corps, car les palettes sont ainsi animées d'un mouvement de fuite devant la matière à fluidiser qui s'écoule par l'ouverture de remplissage.

Par la présente invention, on se propose de remédier à ces divers inconvénients, au moyen d'un appareil du type présenté ci-dessus, pour lequel il ne se produit pas de refoulement de matière, dont l'encombrement vertical est limité, et qui peut être utilisé même pour le transport de matières granuleuses à granules durs.

A cet effec, l'appareil selon l'invention du type comprenant un tambour de forme extérieure générale cylindrique, comportant une serie d'alvéoles, établies selon des génératrices, délimitées par des ailettes et régulièrement réparties sur sa périphérie, et monté tourillonnant et susceptible d'être entraîné en rotation autour d'un axe longitudinal dans une partie cylindrique de section circulaire, coaxiale au tambour sur l'axe longitudinal, d'un corps présentant, à sa partie supérieure une ouverture de remplissage pour la matière à fluidiser, et fermé par deux flasques latérales présentant, chacune une ouverture, dont l'une constitue l'ouverture d'alimentation en gaz sous pression, et l'autre l'ouverture d'évacuation de la matière fluidisée, la surface latérale de la partie cylindrique présentant une ouverture se développant parallèlement aux génératrices sur un secteur circulaire au moins égal à 90 °, et telle qu'un pan incliné, dont l'extrémité supérieure définit un bord longitudinal de l'ouverture de remplissage, décalée d'un côté du plan vertical passant par l'axe de rotation du tambour (ou plan vertical diamétral), se raccorde tangentiellement à la partie cylindrique au niveau de l'un de ces bords longitudinaux de son ouverture, se caractérise en ce que l'autre bord longitudinal de l'ouverture de la partie cylindrique, disposé dans le ou au voisinage du plan vertical passant par l'axe de rotation du tambour, constitue le bord postérieur de la ouverture de remplissage dont le bord antérieur est défini par l'extrémité supérieure du pan incliné, l'ouverture de remplissage étant décalée du côté où ailettes se déplacent vers la partie supérieure du corps. Grâce au mouvement des palettes, qui viennent au devant de la matière à fluidiser s'écoulant par l'ouverture de remplissage, le phénomène de refoulement est bien moins sensible, à tous les régimes de rotation, et le remplissage des alvéoles est mieux assuré. De plus, l'encombrement vertical de l'appareil est limité à une valeur essentiellement déterminée par le diamètre de la partie cylindrique recevant le tambour.

De façon en soi connue, et afin de présenter de bonnes conditions d'étanchéité, les ouvertures d'alimentation en gaz sous pression et d'évacuation sont de préférence décalées du côté du plan vertical passant par l'axe de rotation du tambour opposé au côté où se trouve décalée l'ouverture de remplissage, et sont prévues dans les flasques de sorte que les arcs séparant, le long du périmètre des flasques, chacun des bords des ouvertures des flasques du bord le plus proche de l'ouverture de la partie cylindrique du corps, sont égaux.

Si, de plus, chaque ailette du tambour comporte une portion interne, plane et radiale, par laquelle l'ailette se rattache à un moyeu du tambour, et qui se prolonge par une portion externe plane et inclinée dans le sens de rotation du tambour, par rapport à la portion radiale, la longueur de la portion inclinée étant de préférence de l'ordre des deux tiers de la longueur de la portion radiale de l'ailette, et la portion inclinée de l'ailette étant de préférence incliné d'un angle de l'ordre de 45° sur la portion radiale, on constate que le taux de remplissage est considérablement amélioré.

De préférence, un couteau, fixé sur le bord postérieur de l'ouverture de remplissage, est muni d'une lame dirigée tangentiellement au cylindre enveloppé par la rotation des ailettes du tambour, et dans le sens inverse au sens de rotation du tambour, cette lame présentant de préférence, vue en plan, une forme en V, dont la pointe, disposée sensiblement au milieu du bord postérieur de l'ouverture de remplissage, s'étend dans le sens de rotation du tambour par rapport aux extrémités du V voisines chacune de l'une des extrémités de ce bord postérieur, et vue en coupe, une face plane inclinée, tournée vers l'extérieur du bâti, et une face concave, tournée vers le tambour, et dont le rayon de courbure est légèrement supérieur au rayon du tambour portant ces ailettes, ce qui permet de transporter, dans de bonnes conditions de fonctionnement de l'appareil les matières granuleuses telles que la pulpe sèche de betterave, dont les granules sont très durs.

Pour éviter, enfin, toute infiltration de matière entre les extrémités du moyeu et les parties en regard des flasques, où sont des roulements sur lesquels est monté le moyeu du tambour, il est préférable qu'au fond de chaque alvéole, et à chacune de ses extrémités voisines des flasques, une plaque de protection, inclinée sur l'axe de rotation, de l'extrémité correspondante de l'alvéole vers le centre, soit solidarisée aux deux ailettes délimitant l'alvéole.

La présente invention sera mieux comprise à l'aide d'un exemple de réalisation qui sera décrit ci-après, à titre non limitatif, en référence aux figures en annexe dans lesquelles:

La figure 1 est une vue en perspective de l'appareil.

La figure 2 est une vue en coupe longitudinale de l'appareil représenté sur la figure 1, selon la ligne brisée II de la figure 3.

La figure 3 est une vue en coupe transversale selon III de la figure 2.

Et la figure 4 est une vue en perspective du couteau équipant l'appareil représenté sur les figures 1 à 3.

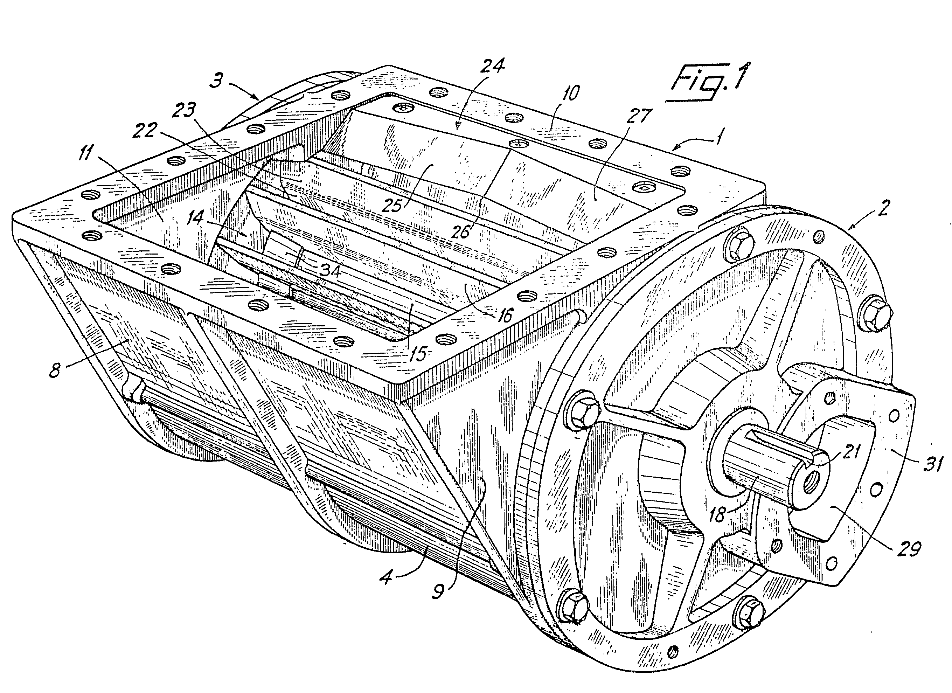

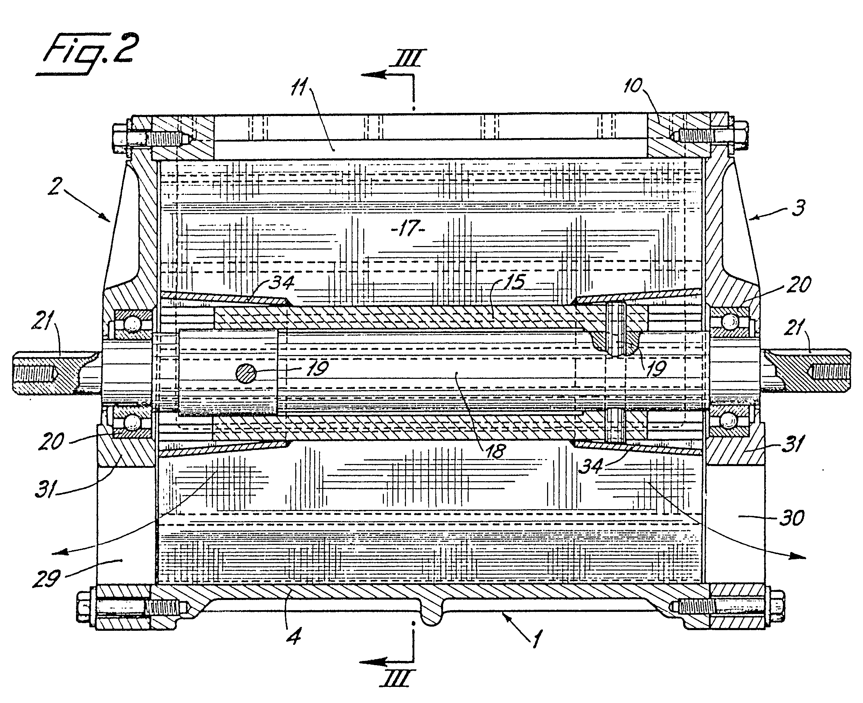

En référence aux figures 1 à 4, l'appareil comprend un bâti constitué d'un corps longitudinal 1, fermé à ses extrémités par deux flasques 2 et 3, symétriques par rapport au plan transversal médian du corps 1.

Le corps longitudinal 1 est lui-même constitué d'une partie cylindrique 4, de section circulaire, dont la surface latérale présente une ouverture 5 se développant parallèlement aux génératrices de la partie cylindrique 4, et sur un secteur circulaire légèrement supérieur à 90°, l'un des bords 6 de l'ouverture 5 se trouvant pratiquement dans le plan vertical passant par l'axe de la partie cylindrique 4, et un pan incliné 8 se rattachant presque tangentiellement, par son extrémité inférieure, sur la partie cylindrique 4, au niveau de l'autre bord 7 de l'ouverture 5.

Les bords latéraux du pan incliné 8 sont rattachés aux bords latéraux de la partie cylindrique 4 par deux voiles latéraux 9, de forme générale triangulaire, et une bride 10 de fixation est également prévue sur le périmètre d'une ouverture de remplissage 11 pour la matière à transporter, définie entre le bord supérieur 12 du pan incliné 8 et le bord 6 de l'ouverture 5 de la partie cylindrique 4, de façon à constituer un bâti présentant une chambre de remplissage 13, définie par le pan incliné 8 et les voiles 9, sous l'ouverture de remplissage 11, à la partie supérieure du bâti, pour assurer l'écoulement de la matière à traiter, provenant d'une trémie sous laquelle l'appareil peut être temporairement ou définitivement solidarisé, vers un tambour 14, de forme générale extérieure cylindrique, constitué d'un moyeu 15 sur lequel sont solidarisées des ailettes 16, de façon à définir une série d'alvéoles 17 régulièrement réparties sur la périphérie du tambour 14 selon les génératrices de ce dernier.

Le moyeu 15 du tambour 14 est fixé sur un arbre 18 par deux goupilles 19, montées selon deux directions transversales à l'arbre 18, et perpendiculaires l'une à l'autre, et l'arbre 18 est monté en rotation dans la partie cylindrique 4 du corps 1, au moyen de deux roulements à billes 20, logés dans les flasques 2 et 3, les deux extrémités de l'arbre 18 saillant à l'extérieur des flasques 2 et 3, étant rainurées en 21 pour recevoir une clavette d'assemblage d'une poulie d'entraînement (non représentée) en rotation du tambour 14 dans la partie cylindrique 4 du corps 1 du bâti.

Il est à noter que le tambour 14 et cette partie cylindrique 4 sont coaxiaux, et que le tambour 14 peut être entraîné en rotation autour de cet axe commun, qui constitue l'axe longitudinal, disposé en général horizontalement, de l'appareil, sans jeu appréciable avec la surface latérale interne en regard de la partie cylindrique 4, les extrémités libres des ailettes 16 n'étant séparées de cette surface latérale interne que par le jeu nécessaire à la rotation du tambour 14.

Chacune des ailettes 16 du tambour 14 comporte une portion interne, plane et radiale 22, par laquelle l'ailette 16 se rattache au moyeu 15, et qui se prolonge par une portion externe plane et inclinée 23. Cette portion externe 23 a une longueur qui est de l'ordre des deux tiers de la longueur de la portion interne radiale 22 de l'ailette 16, la portion externe 23 étant inclinée d'un angle de l'ordre de 45° sur la portion interne radiale 22, dans le sens de rotation du tambour 14.

Le sens de rotation du tambour 14 est choisi de sorte que les ailettes 16 se déplacent vers la partie supérieure du corps 1 du côté du plan vertical passant par l'axe de rotation sur lequel a été décalée l'ouverture de remplissage 11. On obtient ainsi que l'extrémité supérieure 12 du pan incliné 8 constitue le bord antérieur, par rapport au sens de rotation du tambour 14, de l'ouverture de remplissage 11, dont le bord postérieur est constitué par le bord 6 de l'ouverture 5 de la partie cylindrique 4 du corps 1 du bâti, et que les ailettes 16 viennent au devant de la matière qui s'écoule par l'ouverture de remplissage 11.

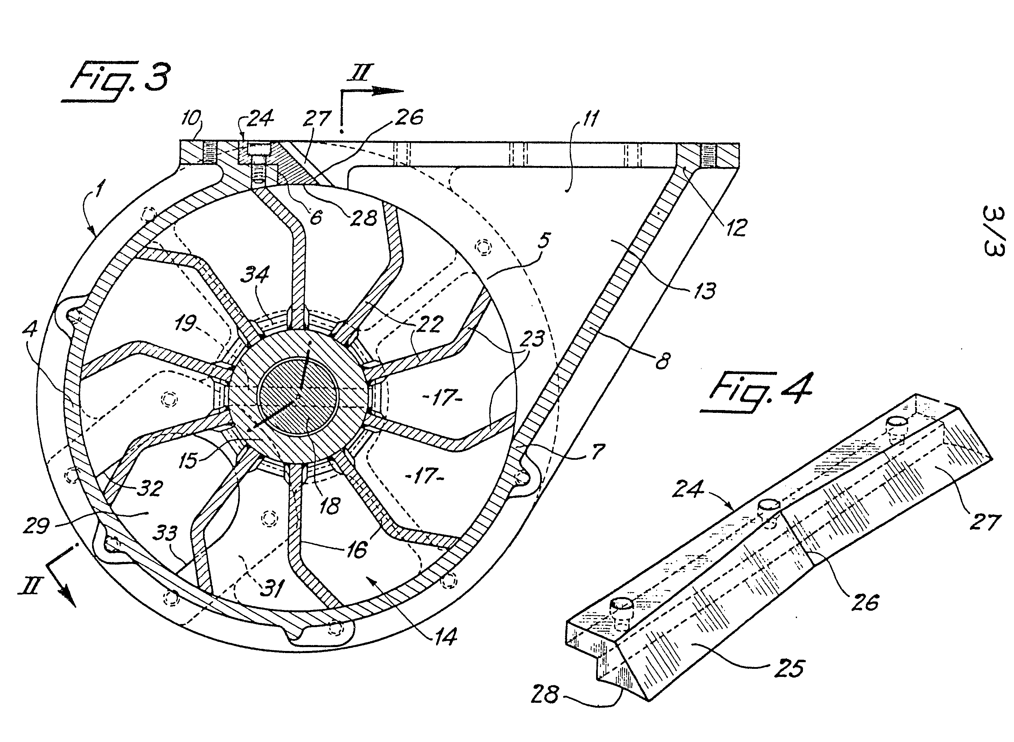

Entre la bordure interne de la bride 10 et le bord 6 de l'ouverture 5, le corps 1 présente un lamage dans lequel est vissée la partie postérieure d'un couteau 24, fixé sur le bord postérieur de l'ouverture de remplissage 11 et muni d'une lame 25, qui est dirigée tangentiellement au cylindre enveloppé par la rotation des ailettes 16 du tambour 14 et dans le sens inverse au sens de rotation de ce tambour 14. Vue en plan, la lame 25 du couteau 24 présente une forme en V dont la pointe 26, disposée sensiblement au milieu du bord postérieur de l'ouverture de remplissage 11, s'étend dans le sens de rotation du tambour 14 par rapport aux extrémités du V qui sont chacune voisines de l'une des extrémités de ce bord postérieur de l'ouverture 11. Cela apparaît clairement sur la figure 4. Vue en coupe, et comme cela ressort de la figure 3, la lame 25 du couteau 24 présente une face plane inclinée 27, tournée vers l'extérieur du bâti, et une face concave 28, tournée vers le tambour 14, et dont le rayon de courbure est légèrement supérieur au rayon du tambour 14 portant ses ailettes 16. Dans la configuration représentée sur la figure 3, l'inclinaison de la face plane 27 est de l'ordre de 45° sur la verticale.

Chacune des flasques 2 et 3, qui se trouve vissée sur une extrémité du corps 1, de façon à fermer latéralement la partie cylindrique 4 de ce dernier, présente une ouverture 29 ou 30, pratiquée dans une surépaisseur 31 de la flasque, et constituant sur la face extérieure de cette dernière, une bride de fixation pour une conduite non représentée. L'une de ces conduites relie l'appareil à une source de gaz sous pression, tandis que l'autre conduite relie l'appareil à un dispositif de stockage de la matière fluidisée. Les ouvertures 29 et 30 des flasques 2 et 3, ménagées vers la partie inférieure du bâti, sont décalées du côté du plan vertical passant par l'axe de rotation du tambour 14, qui est opposé au côté où se trouve décalée l'ouverture de remplissage 11, et les bords 32 et 33 des ouvertures 29 et 30 déterminent respectivement avec les bords 6 et 7 de l'ouverture 5 de la partie cylindrique 4 des arcs égaux, de sorte que les ouvertures 29 et 30 se trouvent en position diamétralement opposée à l'ouverture 5.

Les ouvertures 29 et 30 des flasques 2 et 3, dont l'une constitue l'ouverture d'alimentation en gaz sous pression, par exemple en air pressurisé par un surpresseur, et dont l'autre constitue l'ouverture d'évacuation de la matière traitée, définissent entre elles une chambre axiale inférieure du bâti 1, dans laquelle est amenée la matière qui s'est déversée dans les alvéoles 17 lors de leur passage en regard de l'ouverture de remplissage 11. Cette matière est diluée dans la chambre inférieure par le gaz comprimé amené par l'une des conduites reliée à l'ouverture d'alimentation, et la matière ainsi fluidisée est évacuée par l'ouverture d'évacuation vers le dispositif de stockage.

Afin d'éviter autant que possible l'infiltration de matière à traiter entre les flasques 2 et 3 et le tambour 14, vers les roulements 20, des plaques de protection en tôle 34 peuvent être prévues au fond de chaque alvéole 17, et à chacune de ses extrémités voisines des flasques 2 et 3, ces plaques 34 étant inclinées sur l'axe de rotation du tambour 14, de l'extrémité correspondante de l'alvéole 17 vers le centre du tambour 14, et étant solidarisées chacune aux deux ailettes 16 qui délimitent l'alvéole 17 dans laquelle est disposée la plaque 34 correspondante.

Les essais entrepris avec un appareil de ce type, dont le corps a été réalisé en fonte au chrome, et dont le tambour a été réalisé selon une structure mécanosoudée en acier inoxydable, ont permis de montrer que l'on pouvait traiter les matières pulvérulentes ou granuleuses dont les particules sont les plus dures telles que la pulpe séche de betterave. Avec un appareil dont le tambour présente un diamètre de 300 mm, et en traitant une matière de densité égale à 0,6, on a pu atteindre des débits de 48 tonnes à l'heure avec une vitesse de rotation du tambour de 50 tours par minute. Ceci correspond, compte-tenu du volume de chaque alvéole, à un taux de remplissage de 99 à 100%.

L'appareil selon la présente invention apparaît donc d'une utilisation avantageuse pour fluidiser tous types de matériaux pulvérulents ou granuleux tels que les engrais, les aliments pour bétail, le sucre, les céréales, en vue d'une utilisation à partir d'un stockage. La présence d'un couteau permet également de canaliser la matière pour supprimer les à-coups que l'on rencontrait dans le fonctionnement des appareils antérieurement connus.

Enfin l'encombrement vertical réduit de l'appareil selon la présente invention permet plus commodément de loger ce dernier sous les trémies, silos et autres dispositifs de stockage. Un tel appareil, équipé de roues, présentera aussi une meilleure garde au sol que les appareils déplaçables antérieurement connus.

Lors des essais évoqués ci-dessus, il faut noter que la matière à traiter s'écoulait par gravité, et à la pression atmosphérique, dans l'appareil, dont la chambre inférieure était alimentée en air sous une pression relative de 0,6 à 0,8 bar, selon que la matière à traiter était respectivement de la pulpe sèche de betterave ou des engrais.

Si l'on prend la précaution d'utiliser des roulements 20 étanches, il est de plus inutile d'équiper l'appareil selon l'invention de joints d'étanchéité et de graisseurs, comme cela est le cas dans les appareils antérieurs connus. La maintenance de l'appareil selon l'invention est donc facilitée.

Enfin, il est également à noter que, non seulement la forme particulière des ailettes et leur déplacement à l'encontre de la matière à fluidiser qui s'écoule par l'ouverture d'alimentation, mais également l'échappement, sensiblement le long du pan incliné, de l'air ou du gaz comprimé contenu dans les alvéoles, après leur passage en regard de l'ouverture d'alimentation en gaz sous pression, participent à un remplissage amélioré des alvéoles.

## Revendications

1. Appareil pour fluidiser des matières pulvérulentes ou granuleuses, par incorporation, dans ces matières, d'un gaz sous pression, comprenant un tambour (14), de forme générale extérieure cylindrique, comportant, régulièrement réparties sur sa périphérie, une série d'alvéoles (17), établies selon des génératrices et délimitées par des ailettes (16), et monté tourillonnant et susceptible d'être entraîné en rotation autour d'un axe longitudinal, dans une partie cylindrique (4), de section circulaire, coaxiale au tambour (14) sur l'axe longitudinal, d'un corps (1) présentant, à sa partie supérieure, une ouverture de remplissage (11) pour la matière à fluidiser, et fermé par deux flasques latérales (2, 3) présentant, chacune, une ouverture (29, 30) dont l'une constitue l'ouverture d'alimentation en gaz sous pression, et l'autre l'ouverture d'évacuation de la matière fluidisée, de sorte que la matière, qui remplit les alvéolse (17) défilant successivement en regard de l'ouverture de remplissage (11), est amenée dans une chambre axiale définie entre les ouvertures (29, 30) des flasques latérales (2, 3), par le passage successif des alvéoles (17) en regard de ces ouvertures (29, 30), la surface latérale de la partie cylindrique (4) présentant une ouverture (5) se développant parallèlement aux génératrices sur un secteur circulaire au moins égal à 90°, et telle qu'un pan incliné (8), dont l'extrémité supérieure (12) définit un bord longitudinal de l'ouverture de remplissage (11), décalée d'un côté du plan vertical passant par l'axe de rotation du tambour (14), se raccorde tangentiellement à la partie cylindrique (4), au niveau de l'un des bords longitudinaux de son ouverture (5), caractérisé en ce que l'autre bord longitudinal de l'ouverture (5), disposé dans le ou au voisinage du plan vertical passant par l'axe de rotation du tambour (14), constitue le bord postérieur (6) dans le sens de rotation du tambour (14), de l'ouverture de remplissage (11), dont le bord antérieur est défini par l'extrémité supérieure (12) du pan incliné (8), l'ouverture de remplissage (11) étant décalée du côté où les ailettes (16) se déplacent vers la partie supérieure du corps (1).

2. Appareil selon la revendication 1, caractérisé en ce qu'un couteau (24), fixé sur le bord postérieur de l'ouverture de remplissage (11), est muni d'une lame (25) dirigée tangentiellement au cylindre enveloppé par la rotation des ailettes (16) du tambour (14), et dans le sens inverse au sens de rotation du tambour (14).

3. Appareil selon la revendication 2, caractérisé en ce que, vue en plan, la lame (25) du couteau (24) présente une forme en V dont la pointe (26), disposée sensiblement au milieu du bord postérieur de l'ouverture de remplissage (11), s'étend dans le sens de rotation du tambour (14) par rapport aux extrémités du V voisines chacune de l'une des extrémités de ce bord postérieur.

4. Appareil selon l'une des revendications 2 et 3, caractérisé en ce que, vue en coupe, la lame (25) du couteau (24) présente une face plane inclinée (27) tournée vers l'extérieur du corps (1), et une face concave (28), tournée vers le tambour (14), et dont le rayon de courbure est légèrement supérieur au rayon du tambour (14).

5. Appareil selon l'une des revendications 1 à 4, caractérisé en ce qu'au fond de chaque alvéole (17), et à chacune de ses extrémités voisines des flasques (2 et 3), une plaque de protection (34), inclinée sur l'axe de rotation, de l'extrémité correspondante de l'alvéole (17) vers le centre, est solidarisée aux deux ailettes (16) délimitant l'alvéole (17) correspondante.

6. Appareil selon l'une des revendications 1 à 5, caractérisé en ce que chaque ailette (16) du tambour (14) comporte une portion interne plane et radiale (22), par laquelle l'ailette (16) se rattache à un moyeu (15) du tambour (14), et qui se prolonge par une portion externe plane et inclinée (23) dans le sens de rotation du tambour (14) par rapport à la portion radiale (22).

7. Appareil selon la revendication 6, caractérisé en ce que la longueur de la portion externe inclinée (23) est de l'ordre des deux tiers de la longueur de la portion interne radiale (22) de l'ailette (16).

8. Appareil selon l'une des revendications 6 et 7, caractérisé en ce que la portion externe (23) de l'ailette (16) est inclinée d'un angle de l'ordre de 45° sur la portion radiale (22).

9. Appareil selon l'une des revendications 1 à 8, caractérisé en ce que, de façon en soi connue, les ouvertures d'alimentation en gaz sous pression et d'évacuation (29 ou 30), sont décalées du côté du plan vertical passant par l'axe de rotation du tambour (14) qui est opposé au côté où se trouve décalée l'ouverture de remplissage (11), et sont prévues dans les flasques (2 et 3) de sorte que les arcs séparant, le long du périmètre des flasques (2 et 3), chacun des bords (32 et 33) des ouvertures (29 et 30) des flasques (2 et 3) du bord (6) ou (7) le plus proche de l'ouverture (5) de la partie cylindrique (4) du corps (1), sont égaux.

**Patentansprüche**

1. Vorrichtung zum Fluidisieren pulverförmiger oder granulatartiger Massen durch Zufügung eines Gases unter Druck, bestehend aus einer Trommel (14) mit einer im wesentlichen zylindrischen Aussenform, die gleichmässig verteilt auf ihrem Umfang eine Reihe von Kammern (17) besitzt, die längs den Mantellinien angeordnet und durch Flügel (16) begrenzt sind und die drehbar in einem zylindrischen Teil (4) gelagert und um eine Längsachse antreibbar ist, wobei der zylindrische Teil (4) kreisförmigen Querschnitt aufweist und koaxial zu der Trommel (14) und zu deren Längsachse einen Körper (1) aufweist, der in seinem oberen Bereich eine Füllöffnung (11) für die zu fluidisierenden Massen aufweist und durch zwei seitliche Flansche (2, 3) geschlossen ist, von denen jeder eine Öffnung (29, 30) besitzt, von denen die eine die Zuführöffnung für das Druckgas und die andere die Absaugöffnung für die fluidisierten Massen darstellt, wobei die Masse, welche die nacheinander an der Einfüllöffnung (11) vorbeilaufenden Kammern (17) füllt, in eine Axialkammer geführt wird, die zwischen den Öffnungen (29, 30) der seitlichen Flansche (2, 3) liegt, während die Kammern (17) nacheinander auch an den Öffnungen (29, 30) vorbeilaufen, wobei ferner die Seitenwand des zylindrischen Teiles (4) eine Öffnung (5) aufweist, die sich parallel zu den Mantellinien über einen Kreissektor von mindestens 90° erstreckt und eine schräge Wand (8) vorgesehen ist, deren oberes Ende (12) eine Längskante der Einfüllöffnung (11) bildet und die schräg auf eine Vertikalebene durch die Rotationsachse der Trommel (14) zu verläuft und tangential in den zylindrischen Teil (4) in der Höhe einer der Längskanten der Öffnung (5) übergeht, dadurch gekennzeichnet, dass die andere Längskante der Öffnung (5) die in der oder im Bereich der durch die Rotationsachse der Trommel (14) verlaufenden Vertikalebene liegt, die Hinterkante (6) der Einfüllöffnung (11) in der Drehrichtung der Trommel (14) bildet, deren Vorderkante durch das obere Ende (12) der schrägen Wand (8) gebildet wird, so dass die Einfüllöffnung (11) zu der Seite versetzt angeordnet ist, auf der sich die Flügel (16) in Richtung zum oberen Bereich des Körpers (1) hin bewegen.

2. Vorrichtung nach Anspruch 1, dadurch gekennzeichnet, dass ein Messer (24), das an der Hinterkante der Einfüllöffnung (11) fest angeordnet ist, mit einer tangential zu dem von der Rotation der Flügel (16) der Trommel (14) gebildeten Zylindermantel und entgegen der Drehrichtung der Trommel (14) gerichteten Klinge (25) versehen ist.

3. Vorrichtung nach Anspruch 2, dadurch gekennzeichnet, dass die Klinge (25) des Messers (24) in der Draufsicht eine V-Form besitzt, deren Spitze (26) im wesentlichen in der Mitte der Hinterkante der Einfüllöffnung (11) liegt und sich von der Hinterkante aus in der Drehrichtung der Trommel (14) gegenüber den Enden des V erstreckt, welche im Bereich der Enden der Hinterkante liegen.

4. Vorrichtung nach einem der Ansprüche 2 und 3, dadurch gekennzeichnet, dass die Klinge (25) des Messers (24) im Schnitt eine schräge ebene Fläche (27) aufweist, die zum Aussenbereich des Körpers (1) gerichtet ist, sowie eine konkave Fläche (28), die zur Trommel (14) hin gerichtet ist und deren Kurvenradius leicht grösser als der Radius der Trommel (14) ist.

5. Vorrichtung nach einem der Ansprüche 1 bis 4, dadurch gekennzeichnet, dass am Boden jeder Kammer (17) und an jedem ihrer den Flanschen (2, 3) benachbarten Ende eine Schutzplatte (34) angeordnet ist, die zur Rotationsachse geneigt, am innersten zum Zentrum hin gelegenen Teil einer Kammer (17) hin angeordnet und fest mit beiden Flügeln (16) verbunden ist, welche die zugeordnete Kammer (17) begrenzen.

6. Vorrichtung nach einem der Ansprüche 1 bis 5, dadurch gekennzeichnet, dass jeder Flügel der Trommel (14) einen inneren, ebenen und radial gerichteten Teil (22) aufweist, über den der Flügel (16) an einer Nabe (15) der Trommel (14) befestigt ist und der sich in einem äusseren, ebenen Teil (23) fortsetzt, der in der Drehrichtung der Trommel (14) in bezug auf den radialen Teil (22) abgebogen ist.

7. Vorrichtung nach Anspruch 6, dadurch gekennzeichnet, dass die Länge des äusseren, schrägen Teils (23) etwa zwei Drittel der Länge des inneren, radialen Teils (22) des Flügels (16) beträgt.

8. Vorrichtung nach einem der Ansprüche 6 und 7, dadurch gekennzeichnet, dass der äussere Teil (23) des Flügels (16) unter einem Winkel in der Grössenordnung von 45° zu dem radialen Teil (22) geneigt ist.

9. Vorrichtung nach einem der Ansprüche 1 bis 8, dadurch gekennzeichnet, dass in an sich bekannter Weise die Zuführöffnungen für das Druckgas und zum Absaugen (29, 30) gegenüber einer Vertikalebene durch die Rotationsachse der Trommel (14) nach der Seite verlagert sind, die der Seite gegenüberliegt, nach der die Einfüllöffnung (11) verschoben ist und dass sie in den Flanschen (2, 3) so angeordnet sind, dass die Bögen, die jede der Kanten (32 und 33) der Öffnungen (29 und 30) der Flansche (2 und 3) von der am nächsten gelegenen Kante (6 oder 7) der Öffnung (5) des zylindrischen Teils (4) des Körpers (1) trennt, jeweils gleich gross sind.

**Claims**

1. Apparatus for fluidising powder or granular material by the incorporation into this material of a gas under pressure, comprising a drum (14) of generally cylindrical external shape comprising, regularly spaced about its periphery, a series of cavities (17) arranged according to the generatrices and bounded by blades (16), and rotationally mounted and capable of being put into rotation about a longitudinal axis in a cylindrical portion (4) of circular section co-axial to the drum (14) on the longitudinal axis of a body (1) having at its upper part a filling aperture (11) for the material to be fluidised and closed by two lateral plates (2, 3) each having an opening (29, 30) of which one constitutes the feed opening of gas under pressure and the other the outlet opening for fluidised material, in such a fashion that the material which fills the cavities (17) successively passing the face of the filling opening (11) is fed in an axial chamber defined between the openings (29, 30) of the side plates (2, 3) by the successive passage of the cavities (17) across these openings (29, 30), the side surface of the cylindrical part (4) having an opening (5) extending parallel to the generatrices over a circular sector at least equal to 90° and such that an inclined wall (8) the upper end (12) of which defines a longitudinal edge of the filling opening (11), displaced to one side of the vertical plane passing through the axis of rotation of the drum (14) meets tangentially with the cylindrical part (4) at the level of one of the longitudinal edges of its opening (5), characterised in that the other longitudinal edge of the opening (5), disposed on or in the neighbourhood of the vertical plane passing through the axis of rotation of the drum (14) constitutes the downstream edge (6) in the sense of rotation of the drum (14) of the filling opening (11), the upstream edge of which is defined by the upper end (12) of the inclined wall (8), the filling opening (11) being displaced to the side where the blades (16) move towards the upper part of body (1).

2. Apparatus according to claim 1 characterised in that a knife (24) fixed on the downstream edge of the filling opening (11) is provided with a blade (25) directed tangentially to the cylinder enclosed by the rotation of the blades (16) of the drum (14) and in the sense converse to the sense of rotation of drum (14).

3. Apparatus according to claim 2 characterised in that seen in plan the blade (25) of the knife (24) has a V-shape the point (26) of which, located substantially in the middle of the downstream edge of the filling opening (11), extends in the sense of rotation of the drum (14) with respect to the ends of the V, each adjacent one of the ends of this downstream edge.

4. Apparatus according to one of claims 2 and 3 characterised in that seen in section the blade (25) of the knife (24) has a flat inclined face (27) directed towards the exterior of the body (1) and a concave face (28) directed towards the drum (14) the radius of curvature of which is slightly greater than the radius of the drum (14).

5. Apparatus according to one of claims 1 to 4 characterised in that at the base of each cavity (17) and at each of its ends near the plates (2, 3) a protection plate (34) inclined towards the axis of rotation of the corresponding end of the cavity (17) towards the centre is fixed to two blades (16) defining the corresponding cavity (17).

6. Apparatus according to one of claims 1 to 5 characterised in that each blade (16) of drum (14) comprises a flat radial internal portion (22) by which the blade (16) is fixed to a hub (15) of the drum (14) and which is extended by an external flat portion (23) inclined in the sense of rotation of the drum (14) with respect to the radial portion (22).

7. Apparatus according to claim 6 characterised in that the length of the external inclined portion (23) is of the order of two-thirds the length of the internal radial portion (22) of the blade (16).

8. Apparatus according to one of claims 6 and 7 characterised in that the external portion (23) of the blade (16) is inclined at an angle of the order of 45° on the radial portion (22).

9. Apparatus according to one of claims 1 to 8 characterised in that in fashion known per se the feed openings for gas under pressure and for evacuation (29 of 30) are displaced to the side of the vertical plane passing through the axis of rotation of the drum (14) which is located opposite the side to which the filling opening (11) is displaced, and are provided in the plates (2 and 3) in such a fashion that the arcs separating, along the perimeters of the plates (2 and 3), each of the edges (32, 33) of the openings (29, 30) of the plates (2 and 3) from the edge (6 or 7) closest to the opening (5) of the cylindrical part (4) of the body (1), are equal.

Fig.1

Fig.2

Fig.3

Fig.4